# EUROPEAN PATENT APPLICATION

(11) **EP 1 048 928 A1**
(43) Date of publication of application: **02.11.2000**
(21) Application number: 99108257.9
(22) Date of filing: 27.04.1999
(51) Int. Cl.: G01C 11/02, G01V 8/20

(54) **Spaceborne hot temperature event (HTE) detection arrangement and multi-satellite HTE detection system**

(71) Applicant: Deutsches Zentrum für Luft- und Raumfahrt e.V., 53175 Bonn (DE)
(72) Inventor: Oertel, Dieter, 15910 Waldow/Brand (DE); Zhukov, Boris, 141002 Mystischtschi (RU)
(74) Representative: von Kirschbaum, Albrecht, Dipl.-Ing.

(57) **Abstract**

An optoelectronic sensor arrangement to increase the revisit rate and the detection reliability of spaceborne hot event detection is carried out by a permanently forward and backward looking multispectral imaging sensor for fire recognition satellite system. This dual-view sensor has two fixed imaging directions for simultaneous observation of the Earth surface (8). The spectral sensor channels are identical in both viewing directions. The multispectral imaging sensor data are co-registered for the forward and backward beam, respectively. An orbital multi-satellite system of N satellites (2 to 7) equipped with the dual-view sensor arrangement provides a revisit time reduced by a factor of two compared to the revisit time for N equally spaced satellites on the same orbit (1), but equipped with sensors using only one observation plane.

## Description

The present invention pertains generally to a spaceborne hot temperature event (HTE) detection arrangement comprising a dual view multispectral imaging sensor operating in the visible and infrared wavelength region.

In particular terms, the present invention relates to a spaceborne multispectral imaging sensor arrangement for data collection to be used for the near real time detection of high temperature events on Earth surface, such as vegetation fires, volcano eruptions, coal mine burning and industrial disasters, where an early and reliable detection of the HTE has highest priority. High temperature events on the Earth surface very often cause environmental disasters.

A very essential prerequisite for the determination of the HTE parameters such as temperature, extent, and position is the reliable spaceborne remote detection of the high temperature events as hot spot targets.

The field of this invention are techniques for remote detection of hot targets on Earth surface based on system corrected multispectral data from spaceborne imaging optoelectronic sensor systems which are designed for the acquisition of co-registered radiometric image scene data in the Mid Infrared (MIR, e.g. 3 - 5 µm region), in the Thermal Infrared (TIR, e.g. 8 - 13 µm region) and in the Visible/Near Infrared (VNIR, e.g. 0.4 - 1.0 µm region).

Hitherto, spaceborne multispectral and co-registered imaging sensor data are used for the off-line detection and monitoring of wildfires and other HTEs on Earth surface. The data from the Advanced Very High Resolution Radiometer (AVHRR) sensor on the meteorological NOAA-satellites or the data of the Along Track Scanning Radiometer (ATSR) sensor on the ERS 1/2-satellites, for instance, are used currently for the detection of forest fires. The mentioned multispectral imaging sensors are not dedicated for HTE-detection, but their data are operational available at the moment.

The main problems for reliable remote fire or hot target detection and analysis based on satellite optoelectronic sensor data are:
- strong temporal and spatial variability within the hot target (fire),
- a big dynamic range of the sensor channels is required to avoid saturation,
- obscuration of the hot spot by smoke and clouds,
- variable radiance emission of the background in the adjacency of the hot target, and
- different types of false alarm candidate targets.

False alarm candidates are:
- industrial hot spots,
- clouds,
- sun glitter,
- higher albedo surfaces, and
- extended warm surfaces (heated by the sun).

One strong limitation of the above-mentioned two operational sensors is that their 3 - 5 µm channel, which is the most sensitive channel for HTE detection, suffers from saturation as soon as the temperature of target occupying an image element (pixel) is higher than 50°C.

The ATSR sensor scan cone axis projects downwards and ahead in the along track direction of the satellite, achieving scanning across the satellite track in two areas. An Advanced Along Track Scanning Radiometer (AATSR) with additional channels in the Visible and Near Infrared (VIS/NIR) will be flown on the European Polar Platform ENVISAT. The primary objective of the AATSR is to establish continuity of the ATSR-1 and ATSR-2 data sets of precise Sea Surface Temperature (SST), what means that it is not dedicated for HTE-recognition, too.

Full circular/conical scanning with two observation zones (forward and backward oriented to nadir) was realized in the MSU-K scanner installed on the Russian spacecraft (S/C) of "Okean-O" series in 1983 - 1986. The MSU-K had one spectral band in the in the 0.5-0.9 µm region and could not be used for HTE-recognition.

Since 1994 there are several proposals under consideration for the creation of dedicated spaceborne high temperature disaster recognition systems, such as:
- the Fire Recognition Satellite System (FIRES) proposed by the German Aerospace Research Establishment DLR,
- the FireSat for the determination of the spatial and temporal distribution of biomass burning proposed by the NASA Langley Research Center,
- a spaceborne forest fire detection system for the Mediterranean region (FUEGO) proposed and evaluated by an European consortium, where a revisit time of 30 min is one of the most critical design requirements,
- an Intelligent Infrared Sensor System-prototype (FOCUS) - to be flown of the International Space Station (ISS) - was proposed by DLR to the European Space Agency (ESA) in reaction on an Announcement of Opportunity for externally mounted payload during the early utilization phase of the ISS.

FIRES as well as FOCUS consider to use infrared multispectral imaging data obtained by a forward looking Fore Field Sensor (FFS) for the autonomous on-board detection of HTE.

The Bi-spectral IR Detection (BIRD) sensor technology demonstrator, primarily dedicated for hot spot detection and analysis, is now under development and should be flown in a small satellite mission in 2000.

The discussed operational non-dedicated fire sensors (AVHRR, ATSR, and AATSR) as well as the proposed and planned dedicated fire recognition sensors (FIRES, FireSat, FUEGO, FOCUS and BIRD, respectively) do not consider to use a simultaneously working dual-view infrared multispectral imaging sensor with permanent forward and backward observation directions.

Simultaneous forward and backward directed imaging aerospace sensors are used to obtain Earth observation data for the reconstruction of digital terrain models (DTMs). These mostly panchromatic optoelectronic sensors are built on charge coupled devices (CCD) line arrays, working in VIS/NIR wavelength range below 1.0 µm. They cannot be utilized for HTE-recognition due to the absence of channels in the mid and thermal infrared wavelength region.

Accordingly, it is an object of the present invention to define an optoelectronic satellite sensor arrangement, which is able to provide infrared multispectral imaging data registered simultaneously in forward and backward oriented observation directions both covering nearly identical swath widths, thereby allowing to increase the revisit rate of observation.

According to the present invention there is provided an increase of the observation revisit rate by a spaceborne hot temperature event (HTE) detection arrangement comprising a dual view multispectral imaging sensor operating in the visible and infrared wavelength region, characterized by the following features:
a) two sensor parts providing fixed forward and backward oriented observation directions and covering nearly identical areas with the same swath width twice either by whisk broom, push broom or conical scanning principles;
b) means for geometrical registering simultaneously the multispectral imaging data of the forward and backward looking sensor parts, observing at the same time areas on the Earth surface distant from each other of about thousand or more kilometers in the satellite track direction observing the covered swath twice within a time interval of several minutes during one overpass of the satellite;
c) the two sensor parts have identical spectral, radiometric and geometric resolution parameters, allowing to use the identical hot spot detection and analysis algorithms for the multispectral imaging data obtained from the forward and backward oriented sensor parts.

One possible hot spot detection and analysis algorithm is outlined in the European patent application 97 112 337.7 /EP 0 892 286 A1.

A desired increase of the hot spot detection reliability of the spaceborne hot temperature event (HTE) detection arrangement comprising a dual view multispectral imaging sensor featured according to the invention is obtained by two sensor parts covering two nearly identical areas with quite different angles between the imaging sensor viewing direction and the sun angle, allowing to avoid sun glint effects related false alarms by the combined utilization of the non-sun glint disturbed swath parts of the forward and backward oriented images.

Preferably this arrangement is characterized by sensor parts covering two nearly identical areas with a large angle of about 50 - 90° between the dual-view directions, allowing to recognize HTE in case of partly cloud cover with a higher probability and reliability than in the case of HTE remote sensing in only one observation plane across the satellite track.

According to another aspect of the invention there is provided a reduction of the revisit observation time of a factor of two for a multi-satellite system, consisting of N equally spaced satellites in one Earth orbit where each of these satellites is equipped with an aforesaid permanently forward and backward looking multispectral imaging sensor arrangement compared to the achievable revisit time for N equally spaced satellites on the same orbit, but equipped with sensors using only one observation plane.

The present invention will now be described with reference to the accompanying figures of which:
- Fig.1: is a projection of the orbit plane of an example of a multi-satellite system comprising six satellites; and
- Fig.2: is an orbit segment of the six-satellites system shown in Fig.1.

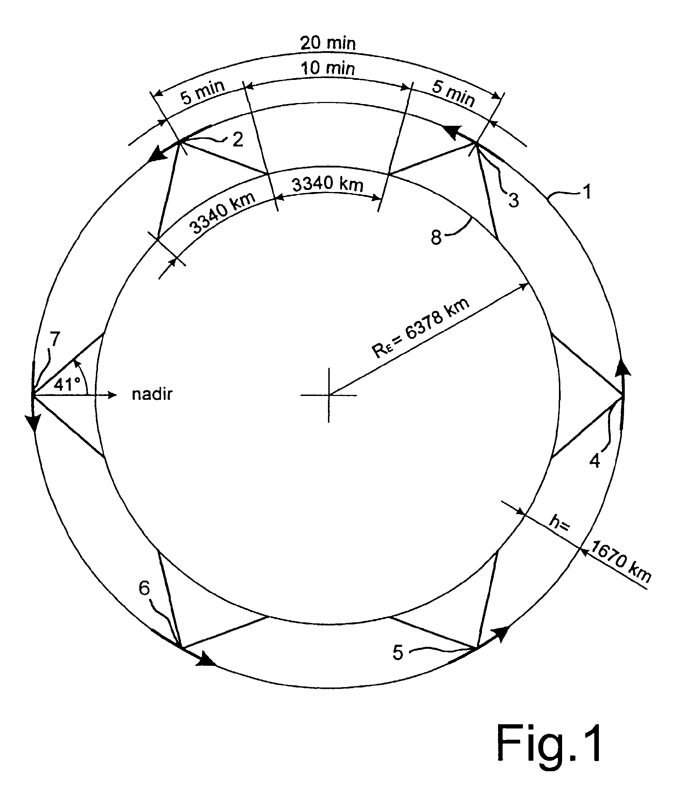

Referring to Fig.1 the Earth orbit 1 is circular with an altitude h of 1670 km over ground. The six satellites 2 to 7 are equally spaced on the orbit 1. The time period for one satellite evolution around the Earth (Earth radius R_{E} = 6378 km) is 120 minutes, what means that the time distance between the satellite overpasses is 20 minutes. The projection of the satellite velocity vector on the Earth surface 8 results in a ground speed of the satellite track of 5.57 km/h. The sub-satellite projection moves over an on-ground distance of 6680 km within 20 minutes. The half of this distance is achieved by a dual view sensor arrangement implemented according to the invention and having two sensor parts one of them looking forward with 41 degree and the other looking backward with 41 degree.

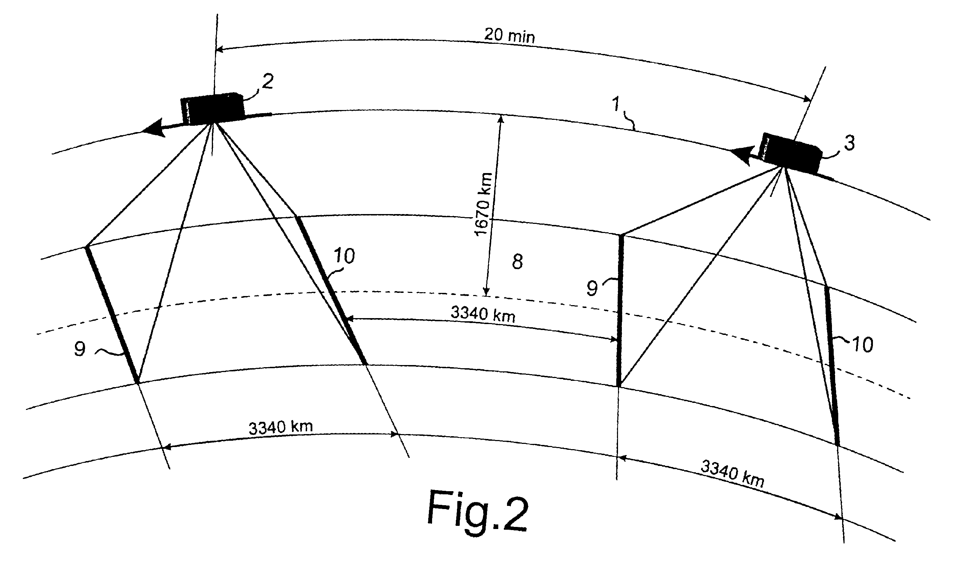

An orbit segment of the six-satellite constellation example equipped with the dual-view sensor arrangement for spaceborne fire detection is schematically shown in Fig.2. There are illustrated two successive satellites 2, 3 of the six equally spaced satellites 2 to 7 in one orbit 1, each satellite equipped with a dual-view line scanning multispectral imaging sensor arrangement. The revisit time, i.e. the regularly reappearing time interval between the overpasses of the forward and backward oriented imaging swaths 9 and 10 on the Earth surface 8 is 10 min. The achieved mean detection time (= 50 % of the revisit time) for the six-satellite dual-view system is 5 min.

## Claims

1. Spaceborne hot temperature event (HTE) detection arrangement comprising a dual view multispectral imaging sensor operating in the visible and infrared wavelength region, characterized by the following features:
a) two sensor parts providing fixed forward and backward oriented observation directions and covering nearly identical areas with the same swath width twice either by whisk broom, push broom or conical scanning principles;
b) means for geometrical registering simultaneously the multispectral imaging data of the forward and backward looking sensor parts, observing at the same time areas on the Earth surface (8) distant from each other of about thousand or more kilometers in the satellite track direction observing the covered swath twice within a time interval of several minutes during one overpass of the satellite;
c) the two sensor parts have identical spectral, radiometric and geometric resolution parameters, allowing to use the identical hot spot detection and analysis algorithms for the multispectral imaging data obtained from the forward and backward oriented sensor parts.

2. Arrangement according to claim 1, characterized by two sensor parts covering two nearly identical areas with quite different angles between the imaging sensor viewing direction and the sun angle, allowing to avoid sun glint effects related false alarms by the combined utilization of the non-sun glint disturbed swath parts of the forward and backward oriented images.

3. Arrangement according to claim 2, characterized by sensor parts covering two nearly identical areas with a large angle of about 50 - 90° between the dual-view directions, allowing to recognize HTE in case of partly cloud cover with a higher probability and reliability than in the case of HTE remote sensing in only one observation plane across the satellite track.

4. A multi-satellite HTE detection system consisting of N equally spaced satellites (2 to 7) in one Earth orbit (1) where each of these satellites is equipped with a permanently forward and backward looking multispectral imaging sensor arrangement as claimed in any of the claims 1 to 3, characterized by a revisit time for the observation which is reduced by a factor of two compared to the achievable revisit time for N equally spaced satellites on the same orbit, but equipped with sensors using only one observation plane.
